# EUROPEAN PATENT APPLICATION

(11) **EP 4 764 238 A1**
(43) Date of publication of application: **24.06.2026**
(21) Application number: 25214972.9
(22) Date of filing: 11.11.2025
(51) Int. Cl.: F16C 17/02, F16C 33/12, F16C 33/20

(54) **SLIDE BEARING FOR A ROTATING SHAFT OF A VEHICLE DRIVING MOTOR**

(30) Priority: 23.12.2024 JP 2024226286
(71) Applicant: Daido Metal Company Ltd., Nagoya-shi, Aichi 460-0008 (JP)
(72) Inventor: TAKEDA, Kohei, Inuyama-shi, (JP); MAITANI, Shinya, Inuyama-shi, (JP)
(74) Representative: Kraus & Lederer PartGmbB

(57) **Abstract**

There is provided a slide bearing that is unlikely to be damaged due to discharge on a rotating shaft and a sliding surface. A slide bearing (10) bears a rotating shaft (6) of a vehicle driving motor (1). The slide bearing (10) includes a metal base (20) having a cylindrical shape and an insulating layer (30). The metal base (20) includes an inner circumferential surface (21), an outer circumferential surface (22), and two axial-directional end surfaces (23). The insulating layer (30) covers at least the inner circumferential surface (21) and two axial-directional end surfaces (23) of the metal base (20). A maximal thickness of the insulating layer (30) covering the axial-directional end surface (23) of the metal base (20) is less than or equal to 50% of a minimal thickness of the insulating layer (30) covering the inner circumferential surface (21) of the metal base (20).

## Description

### BACKGROUND OF THE INVENTION

### (1) FIELD OF THE INVENTION

The present disclosure relates to a slide bearing that bears a rotating shaft of a vehicle driving motor.

### (2) DESCRIPTION OF RELATED ART

A bearing is used for a rotating shaft of a motor, and the like. For example, the motor is used for the driving of a vehicle. The motor includes a case, a stator that includes a coil, a rotor that includes a magnet, a rotating shaft that is connected to the rotor, and a bearing that is provided in the case so as to support the rotating shaft and that is disposed in a bearing holding hole. In the case, with respect to the rotating shaft, the stator is disposed on the outer side and the rotor is disposed on the inner side. When the coil of the stator is energized, the coil generates a magnetic field. The rotor is rotated by the interaction between the magnetic field generated by the coil and a magnetic field generated by the magnet of the rotor. The rotation of the rotor rotates the rotating shaft. From the rotating shaft, the dynamic power of the rotation is output to the exterior.

A motor equipped in an electric vehicle is driven by an inverter method, as described in JP-A-2022-146253, for example. In the inverter method, the motor can change the rotation speed of the rotating shaft, by changing the frequency of an electric power source that energizes the coil.

As for the motor that is used for the driving of the vehicle, it is desirable to increase the frequency of the electric power source and enhance efficiency. However, when the frequency of the electric power source is increased, the rotating shaft easily takes charge. As a result, a large electric potential difference can be generated between the rotating shaft and the case, between which the bearing is interposed. In the case where the bearing is a rolling bearing, the discharge due to the electric potential difference can occur in lubricant between a bearing ring and a rolling element in the rolling bearing. The discharge can damage the bearing ring and the rolling element. As means for preventing the damage of the bearing ring and the rolling element, JP-A-2023-30949 describes that an insulating film is adopted as a fitting surface through which the bearing ring is fitted to the rotating shaft and the case.

For reducing the sound due to the rotation of the rotating shaft, the alteration of the bearing from the rolling bearing to a slide bearing has been studied. In the case where the bearing is the slide bearing in an internal combustion engine that is used for the driving of the vehicle, an electric potential difference can be generated between the rotating shaft and the slide bearing, by leakage current from an ignition system of the internal combustion engine or an electric apparatus, static electricity due to the friction between the rotating shaft and a sliding surface of the slide bearing, or the like, so that discharge can occur. The discharge can damage the rotating shaft and the sliding surface of the slide bearing. As means for preventing the damage of the rotating shaft and the sliding surface of the slide bearing, JP-A-2009-92156 describes that a resin layer having an insulation property is adopted as the sliding surface of the bearing. The resin layer has the insulation property, by containing 10 to 40 volume% carbon-based particles whose average particle diameter is 15 to 45% of the film thickness of the resin layer. In JP-A-2009-92156, before the electric potential difference between the resin layer and the rotating shaft becomes large, such a faint discharge that the rotating shaft and the sliding surface of the slide bearing are not damaged is actively performed between carbon-based particles exposed on the sliding surface and the surface of the rotating shaft, and thereby, the damage of the rotating shaft and the sliding surface of the slide bearing is avoided.

### BRIEF SUMMARY OF THE INVENTION

In the case where the bearing is the slide bearing in the motor that is used for the driving of the vehicle, the electric potential difference between the rotating shaft and the case is larger than the electric potential difference between the rotating shaft and the slide bearing that is generated in the internal combustion engine due to the above-described cause. Even when the slide bearing described in JP-A-2009-92156 is applied to the motor that is used for the driving of the vehicle, the damage occurs, for example, due to the fusion of the resin around carbon-based particles. It is not possible to sufficiently avoid the damage of the rotating shaft and the sliding surface of the slide bearing.

An object of the present disclosure is to provide a slide bearing that is unlikely to be damaged due to the discharge on the rotating shaft and the sliding surface.

A slide bearing that bears a rotating shaft of a vehicle driving motor in the present disclosure includes:
a metal base that includes an inner circumferential surface, an outer circumferential surface, and two axial-directional end surfaces, and that has a cylindrical shape; and
an insulating layer that covers at least the inner circumferential surface of the metal base and the two axial-directional end surfaces of the metal base, in which
a maximal thickness of the insulating layer covering the axial-directional end surface of the metal base is more than 0% of a minimal thickness of the insulating layer covering the inner circumferential surface of the metal base, and is less than or equal to 50% of the minimal thickness of the insulating layer covering the inner circumferential surface of the metal base.

### BRIEF DESCRIPTION OF THE SEVERAL VIEWS OF THE DRAWING

Fig. 1 is a cross-sectional view schematically showing a motor according to an embodiment in the present disclosure, taken along an axial direction;
Fig. 2 is a perspective view of a slide bearing;
Fig. 3 is a cross-sectional view of the slide bearing taken along line A in Fig. 2;
Fig. 4 shows a cross-section taken along line B-B in Fig. 2 and a plan view as viewed from a direction of line B-B;
Fig. 5 is a cross-sectional view of the slide bearing taken along line C-C in Fig. 4;
Fig. 6 is a cross-sectional view for describing the discharge to a slide bearing in a comparative example;
Fig. 7 is a cross-sectional view for describing the discharge to the slide bearing in the embodiment, and is a diagram corresponding to Fig. 6;
Fig. 8 is a cross-sectional view of a slide bearing according to a modification;
Fig. 9 is a cross-sectional view of a slide bearing according to another modification, and is a diagram corresponding to Fig. 5; and
Fig. 10 is a cross-sectional view of a slide bearing according to another modification, and is a diagram corresponding to Fig. 5.

### DETAILED DESCRIPTION OF THE INVENTION

An embodiment and modifications thereof in the present disclosure relate to the following [1] to [4].
[1] A slide bearing that bears a rotating shaft of a vehicle driving motor, the slide bearing comprising:
   a metal base that includes an inner circumferential surface, an outer circumferential surface, and two axial-directional end surfaces, and that has a cylindrical shape; and
   an insulating layer that covers at least the inner circumferential surface of the metal base and the two axial-directional end surfaces of the metal base, wherein
   a maximal thickness of the insulating layer covering the axial-directional end surface of the metal base is more than 0% of a minimal thickness of the insulating layer covering the inner circumferential surface of the metal base, and is less than or equal to 50% of the minimal thickness of the insulating layer covering the inner circumferential surface of the metal base.
[2] The slide bearing according to [1], wherein the metal base includes two partial metal bases each of which has a semi-cylindrical shape.
[3] The slide bearing according to [1] or [2], wherein a thickness of the insulating layer covering the axial-directional end surface of the metal base is decreased from the inner circumferential surface of the metal base toward the outer circumferential surface of the metal base.
[4] The slide bearing according to any one of [1] to [3], wherein
   each of the axial-directional end surfaces includes an inclined surface that is inclined with respect to an axial direction of the cylindrical shape, and
   the inclined surface of each of the axial-directional end surfaces is connected to the inner circumferential surface.

An embodiment and modifications thereof in the present disclosure will be described below with reference to the drawings. In the drawings attached to the present specification, for convenience of ease of illustration and understanding, scales and dimensional ratios of vertical and horizontal sizes, and the like are altered and exaggerated from those of an actual object, when appropriate. Constituents and the like shown in some figures are occasionally omitted in other figures.

In the present specification, terms specifying shapes, geometric conditions, and degrees of them, as exemplified by "parallel", "orthogonal", and "identical", values of lengths and angles, and the like are not limited to strict meanings, and are interpreted as including ranges in which the same functions can be expected.

In the present specification, in the case where a plurality of candidates of the upper limit of a certain parameter and a plurality of candidates of the lower limit of the parameter are mentioned, the numerical range of the parameter may be a combination of any one candidate of the upper limit and any one candidate of the lower limit.

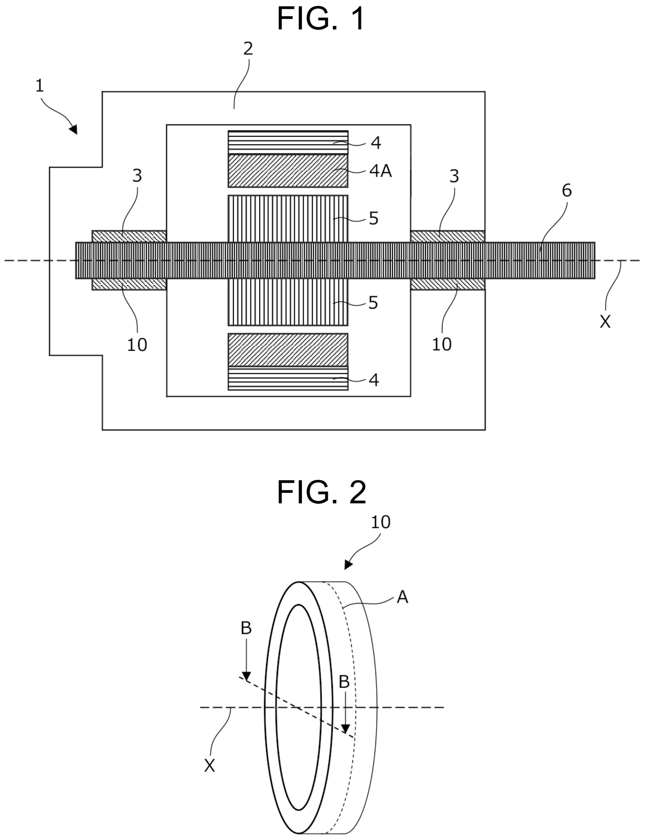

Fig. 1 is a schematical cross-sectional view of a motor 1 according to an embodiment in the present disclosure. For example, the motor 1 is used for the driving of a vehicle. For example, the vehicle is an electric vehicle. The motor 1 outputs the rotation to the exterior. As shown in Fig. 1, the motor 1 includes a case 2, a stator 4, a rotor 5, a rotating shaft 6, and slide bearings 10.

The case 2 houses other members of the motor 1. The case 2 is provided with bearing holding holes 3 into which the slide bearings 10 are pressed. The bearing holding hole 3 is a hole having such a columnar shape that the slide bearing 10 is appropriately pressed. In the embodiment, an inner surface of the bearing holding hole 3 is not divided into a plurality of surfaces, and is an integrated surface. The case 2 may be constituted by a plurality of portions, such that the inner surface of the bearing holding hole 3 is divided into a plurality of surfaces. The case 2 may be provided with an unillustrated oil passage for supplying lubricant between the slide bearing 10 and the rotating shaft 6.

The stator 4 and the rotor 5 generate the dynamic power of the motor 1. The stator 4 is more distant from the rotating shaft 6 than the rotor 5 is. The stator 4 includes a coil 4A. The coil 4A is connected to an unillustrated electric power source. The rotor 5 is connected to the rotating shaft 6. The rotor 5 includes a magnet.

The rotating shaft 6 transmits the rotation of the motor 1 to the exterior. The rotating shaft 6 extends in an axial direction X, and rotates around the axial direction X. The rotating shaft 6 protrudes to the exterior of the case 2. The rotating shaft 6 may be connected to an unillustrated speed reducer that amplifies rotating torque.

When the coil 4A is energized by the electric power source, the coil 4A generates a magnetic field. The rotor 5 is rotated by the interaction between the magnetic field generated by the coil 4A and a magnetic field generated by the magnet of the rotor 5. The rotation of the rotor 5 rotates the rotating shaft 6 connected to the rotor 5. In this way, the motor 1 outputs the rotation of the rotating shaft 6 to the exterior as the dynamic power.

The slide bearing 10 in the embodiment will be described. The slide bearing 10 bears the rotating shaft 6 at an appropriate position. By the slide bearing 10, the rotating shaft 6 rotates at the appropriate position. As a result, the loss of the dynamic power of the rotation of the rotating shaft 6 is restrained.

Fig. 2 shows a perspective view of the slide bearing 10. As shown in Fig. 2, the slide bearing 10 has a roughly cylindrical shape. The rotating shaft 6 passes through the inner side of the cylindrical shape of the slide bearing 10. The axial direction of the cylindrical shape of the slide bearing 10 coincides with the axial direction X of the rotating shaft 6. The inner side of the cylindrical shape of the slide bearing 10 serves as a sliding surface that receives the rotating shaft 6. The gap between the sliding surface of the slide bearing 10 and the rotating shaft 6 is filled with unillustrated lubricant.

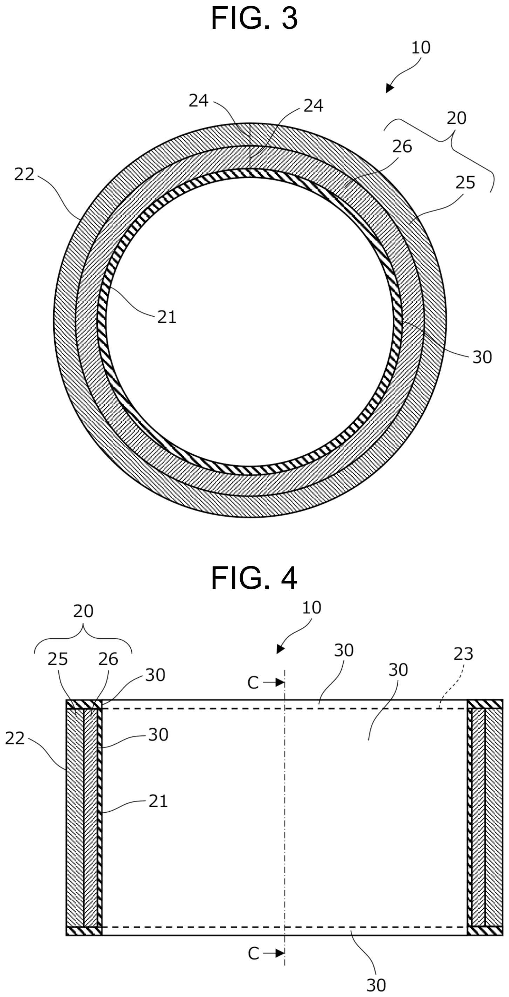

Fig. 3 shows a cross-sectional view of the slide bearing 10 taken along line A in Fig. 2, as viewed in a direction orthogonal to the axial direction X. As shown in Fig. 3, the slide bearing 10 includes a metal base 20 and an insulating layer 30.

The metal base 20 is a main body portion of the slide bearing 10. The metal base 20 has a cylindrical shape. The axial direction of the cylindrical shape coincides with the axial direction X of the rotating shaft 6. The metal base 20 includes an inner circumferential surface 21, an outer circumferential surface 22, two axial-directional end surface 23, and circumferential-directional end surfaces 24. The inner circumferential surface 21, the outer circumferential surface 22, and the circumferential-directional end surfaces 24 spread parallel to the axial direction X. The axial-directional end surfaces spread in the direction orthogonal to the axial direction X. As shown in Fig. 3, each of the inner circumferential surface 21 and the outer circumferential surface 22 has a circumferential shape on a cross-section in the direction orthogonal to the axial direction X. Each of the two axial-directional end surfaces 23 and the circumferential-directional end surface 24 is a flat surface. As shown in Fig. 3, the circumferential-directional end surfaces 24 of a single metal plate are coupled, so that the metal base 20 has the cylindrical shape.

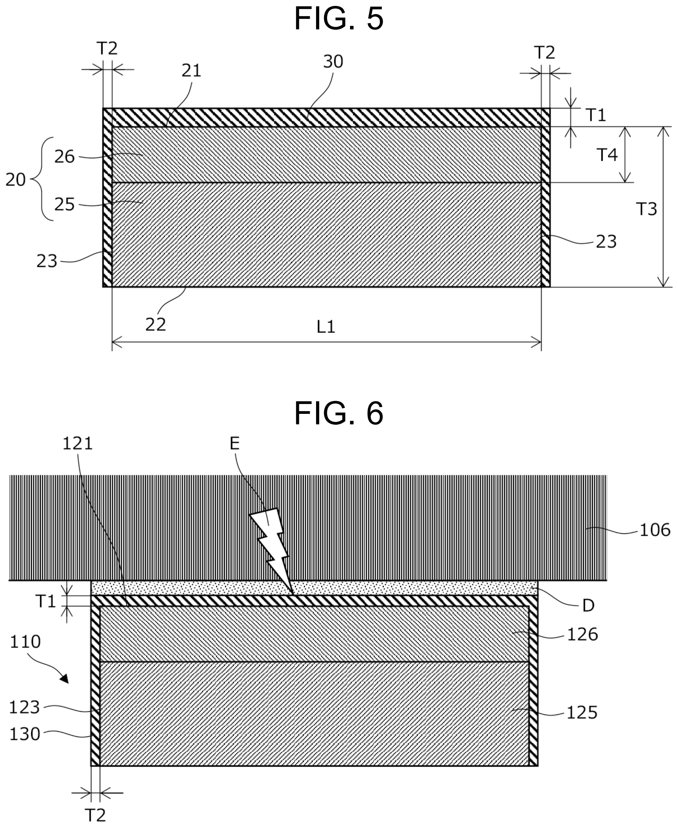

Fig. 4 shows a cross-section of the slide bearing 10 taken along line B-B in Fig. 2 and a plan view of the slide bearing 10 as viewed from a direction of line B-B. Fig. 5 shows a cross-sectional view of the slide bearing 10 taken along line C-C in Fig. 4. A length L1 of the metal base 20 along the axial direction X may be constant over the whole in the circumferential direction. The length L1 of the metal base 20 along the axial direction X may be 5 mm or more, and may be 50 mm or less. As shown in Fig. 3, a thickness T3 of the metal base 20 may be constant over the whole in the circumferential direction. The thickness T3 of the metal base 20 may be 0.8 mm or more, and may be 3 mm or less. The thickness of the metal base 20 means the length along the normal direction of the inner circumferential surface 21 and the outer circumferential surface 22, and coincides with the length along the radial direction of the metal base 20 having the cylindrical shape.

As shown in Fig. 3, Fig. 4, and Fig. 5, the metal base 20 includes a back metal layer 25 and a bearing alloy layer 26. Each of the back metal layer 25 and the bearing alloy layer 26 has a cylindrical shape. The back metal layer 25 is disposed on the outer side of the bearing alloy layer 26 in the radial direction. An inner side surface of the back metal layer 25 and an outer side surface of the bearing alloy layer 26 are joined to each other.

The back metal layer 25 supports the bearing alloy layer 26. The back metal layer 25 has a high strength, and is unlikely to deform. The back metal layer 25 makes it possible to keep the strength while the whole of the metal base 20 is thin. As shown in Fig. 3, the thickness of the back metal layer 25 may be constant over the whole in the circumferential direction. The thickness of the back metal layer 25 may be 0.5 mm or more, and may be 2.8 mm or less. The back metal layer 25 may be hypoeutectoid steel or stainless steel that contains 0.05 mass% or more and 0.5 mass% or less carbon.

The bearing alloy layer 26 has functions that need to be exerted as a bearing that supports the rotating shaft 6, as exemplified by pressure resistance, abrasion resistance, heat resistance, high heat conductivity, and low friction. As shown in Fig. 3, a thickness of the bearing alloy layer 26 may be constant over the whole in the circumferential direction. The thickness T4 of the bearing alloy layer 26 may be 0.1 mm or more, and may be 0.5 mm or less. The bearing alloy layer 26 may be an aluminum alloy or a copper alloy.

Without being limited to the illustrated example, the thickness T3 of the metal base 20 and the thickness T4 of the bearing alloy layer 26 do not need to be constant in the circumferential direction. The thickness T3 of the metal base 20 and the thickness T4 of the bearing alloy layer 26 may be maximized at a certain position in the circumferential direction, and may be decreased toward a position that is 180° apart from the certain position in the circumferential direction.

The insulating layer 30 protects the metal base 20 so as to avoid electric current from unintentionally flowing through the metal base 20. The insulating layer 30 has an insulation property. The insulation property means that a resistance value measured using a commonly marketed insulation resistance meter (for example, MODEL 6018 manufactured by KYORITSU ELECTRICAL INSTRUMENTS WORKS, LTD.) in a state where a line terminal is connected to the surface of the insulating layer 30 covering the inner circumferential surface 21 of the metal base 20 and an earth terminal is connected to the outer circumferential surface 22 of the metal base 20 under an environment in which the temperature is 5°C to 30°C and the relative humidity is 45% to 75% is 10⁵ Ω or more. The insulating layer 30 covers at least the whole of the inner circumferential surface 21 of the metal base 20 and the whole of the two axial-directional end surfaces 23. The insulating layer 30 covering the inner circumferential surface 21 of the metal base 20 serves as the sliding surface of the slide bearing 10. The insulating layer 30 may cover at least a part of the outer circumferential surface 22 of the metal base 20. In the case where at least a part of the outer circumferential surface 22 of the metal base 20 is not covered with the insulating layer 30, when the slide bearing 10 is pressed into the bearing holding hole 3 of the case 2, the slide bearing 10 is easily held in the bearing holding hole 3 due to the friction between the metal base 20 and the inner surface of the case 2.

The insulating layer 30 has a thin film shape. The thickness of the insulating layer 30 covering the axial-directional end surface 23 is less than the thickness of the insulating layer 30 covering the inner circumferential surface 21 of the metal base 20. Specifically, a maximal thickness of the insulating layer 30 covering the axial-directional end surface 23 of the metal base 20 is more than 0% of a minimal thickness of the insulating layer 30 covering the inner circumferential surface 21, and is less than or equal to 50% of the minimal thickness, preferably less than or equal to 30% of the minimal thickness, more preferably less than or equal to 5% of the minimal thickness. A thickness T1 of the insulating layer 30 covering the inner circumferential surface 21 of the metal base 20 may be constant over the whole in the circumferential direction. The thickness T1 of the insulating layer 30 covering the inner circumferential surface 21 of the metal base 20 may be 5 µm or more, and may be 50 µm or less. The thickness T1 of the insulating layer 30 covering the inner circumferential surface 21 is the length of the insulating layer 30 covering the inner circumferential surface 21 along the normal direction of the inner circumferential surface 21, and coincides with the length of the insulating layer 30 covering the inner circumferential surface 21 along the radial direction. A thickness T2 of the insulating layer 30 covering the axial-directional end surface 23 of the metal base 20 may be constant over the whole in the circumferential direction. The thickness T2 of the insulating layer 30 covering the axial-directional end surface 23 of the metal base 20 may be 2.5 µm or more, and may be 25 µm or less. The thickness T2 of the insulating layer 30 covering the axial-directional end surface 23 is the length of the insulating layer 30 covering the axial-directional end surface 23 along the normal direction of the axial-directional end surface 23, and is the length of the insulating layer 30 covering the axial-directional end surface 23 along the axial direction X. It is permissible for a variation of 30% or less to be generated in the thickness of the insulating layer 30, due to a production error at the time of the formation of the insulating layer 30, or the like.

The material of the insulating layer 30 may be a resin. The material of the insulating layer 30 may contain one or more of polyether ether ketone (PEEK), polyether ketone (PEK), polytetrafluoroethylene (PTFE), polyimide (PI), polyamide imide (PAI), polyamide (PA), and epoxy (EP). The insulating layer 30 may contain one or more of a solid lubricant, a reinforced fiber for increasing the strength, a filler, and a colorant. Examples of the solid lubricant include graphite, molybdenum sulfide (MoS₂), tungsten sulfide (WS₂), and hexagonal boron nitride (h-BN). Examples of the reinforced fiber include carbon fiber and metal compound fiber. Examples of the filler include calcium fluoride (CaF₂), calcium carbonate (CaCO₃), barium sulfate, ferric oxide, calcium phosphate, and tin oxide (SnO₂).

A method for disposing the slide bearing 10 in the bearing holding hole 3 of the case 2 will be described. The slide bearing 10 is pressed into the bearing holding holes 3 of the case 2, in a state where the circumferential-directional end surfaces 24 of the metal base 20 are coupled. The length of an outer circumference of the slide bearing 10 before the slide bearing 10 is pressed into the bearing holding hole 3 is slightly more than the length of an inner circumference of the bearing holding hole 3. After the slide bearing 10 is pressed into the bearing holding hole 3, the outer circumference of the slide bearing 10 and the inner circumference of the bearing holding hole 3 press each other. By the pressure of the mutual pressing, the slide bearing 10 is fixed and disposed in the bearing holding hole 3.

The rotating shaft 6 is inserted into the inner side of the cylindrical shape of the slide bearing 10 disposed in the bearing holding hole 3 of the case 2. The slide bearing 10, in the inner side, supports the rotating shaft 6 at an appropriate position.

The motor 1 includes two slide bearings 10 in the example shown in Fig. 1, but may include any number of slide bearings 10, without being limited to the illustrated example. The bearing holding hole 3 is provided on the case 2 to a number corresponding to the number of slide bearings 10 included in the motor 1.

As described above, as for the motor that is used for the driving of the vehicle, it is desirable to increase the frequency of the electric power source and enhance efficiency. However, when the frequency of the electric power source is increased, the rotating shaft easily takes charge. As a result, a large electric potential difference can be generated between the rotating shaft and the slide bearing. When this electric potential difference exceeds the breakdown voltage of the lubricant supplied between the rotating shaft and the slide bearing, the discharge from the rotating shaft to the slide bearing occurs. The discharge causes damage such as the fusion of the rotating shaft or the sliding surface of the slide bearing. The damage of the rotating shaft or the sliding surface of the slide bearing makes it difficult for the slide bearing to support the rotating shaft at an appropriate position.

For avoiding the damage of the sliding surface of the slide bearing due to the discharge, it is possible that the inner circumferential surface of the metal base is covered with an insulating layer. The insulating layer serves as the sliding surface of the slide bearing. However, in the case where only the inner circumferential surface of the metal base is covered with the insulating layer, the discharge from the rotating shaft to the axial-directional end surface of the metal base occurs frequently. This discharge raises the temperature of the slide bearing. When the slide bearing has a high temperature, the heat can cause damage such as the fusion of the insulating layer that serves as the sliding surface.

For avoiding the discharge to the axial-directional end surface of the metal base as well, it is possible that the axial-directional end surface of the metal base is also covered with the insulating layer. Fig. 6 shows a slide bearing 110 in which an inner circumferential surface 121 and axial-directional end surfaces 123 of a metal base 120 are covered with an insulating layer 130, as a comparative example. For avoiding the discharge to both of the inner circumferential surface 121 and axial-directional end surface 123 of the metal base 120, a thickness T2 of the insulating layer 130 covering the axial-directional end surface 123 of the metal base 120 is almost the same as a thickness T1 of the insulating layer 130 covering the inner circumferential surface 121 of the metal base 120. In such a slide bearing 110, the breakdown voltage of the insulating layer 130 covering the inner circumferential surface 121 of the metal base 120 is almost the same as the breakdown voltage of the insulating layer 130 covering the axial-directional end surface 123 of the metal base 120. When an electric potential difference is generated between the rotating shaft 106 and the slide bearing 110, discharge E from the rotating shaft 106 to the inner circumferential surface 121 close to the rotating shaft 106 easily occurs. The insulating layer 130 that covers the inner circumferential surface 121 and that serves as the sliding surface is easily damaged.

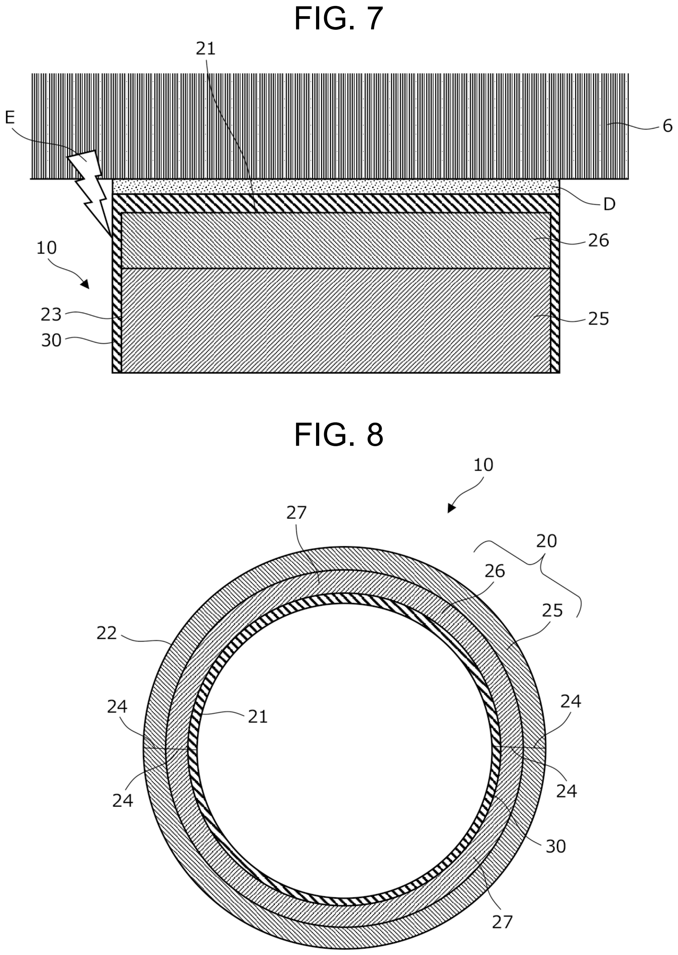

In the slide bearing 10 in the embodiment, the maximal thickness T2 of the insulating layer 30 covering the axial-directional end surface 23 of the metal base 20 is less than or equal to 50% of the minimal thickness T1 of the insulating layer 30 covering the inner circumferential surface 21 of the metal base 20. In such a slide bearing 10, the breakdown voltage of the insulating layer 30 covering the axial-directional end surface 23 is lower than the breakdown voltage of the insulating layer 30 covering the inner circumferential surface 21. As shown in Fig. 7, when an electric potential difference is generated between the rotating shaft 6 and the slide bearing 10, discharge E from the rotating shaft 6 to the axial-directional end surface 23 having a low breakdown voltage easily occurs. The discharge to the inner circumferential surface 21 of the metal base 20 is unlikely to occur. The insulating layer 30 that covers the inner circumferential surface 21 and that serves as the sliding surface is unlikely to be damaged by the discharge.

Even when the insulating layer 30 covering the axial-directional end surface 23 is damaged by the discharge E, there is no influence on the insulating layer 30 that covers the inner circumferential surface 21 and that serves as the sliding surface. Since the axial-directional end surface 23 is covered with the insulating layer 30, the discharge from the rotating shaft 6 to the axial-directional end surface 23 of the metal base 20 occurs less frequently compared to a case where the temperature of the slide bearing 10 becomes high.

For the slide bearing 10 in the above-described embodiment, various alternations may be performed. Some modifications of the slide bearing 10 will be described. In each modification described below, descriptions in common with the above-described embodiment are occasionally omitted.

In the slide bearing 10 in the above-described embodiment, the circumferential-directional end surfaces 24 of the single metal place are coupled, so that the metal base 20 has the cylindrical shape. Without being limited to the above-described embodiment, the metal base 20 may include two partial metal bases 27 each of which has a semi-cylindrical shape, as shown in a modification in Fig. 8. Respective circumferential-directional end surfaces 24 of the two partial metal bases 27 each of which has a semi-cylindrical shape are coupled, so that the metal base 20 has a cylindrical shape. By the two partial metal bases 27 each of which has a semi-cylindrical shape, the inner circumferential surface 21, the outer circumferential surface 22, two axial-directional end surfaces 23, and circumferential-directional end surfaces 24 of the metal base 20 are formed. A portion of the inner circumferential surface 21 of the metal base 20 that is formed on each partial metal base 27 has a single circular arc shape on a cross-section along a direction orthogonal to the axial direction X, but may have a plurality of circular arc shapes.

The thickness of the partial metal base 27 may be constant over the whole in the circumferential direction. The thickness of the partial metal base 27 may be 0.8 mm or more, and may be 3 mm or less. The thickness of the partial metal base 27 does not need to be constant in the circumferential direction. The thickness of the partial metal base 27 may be maximized at the center in the circumferential direction, and may be decreased toward the circumferential-directional end surface 24. The thickness of the partial metal base 27 means the length along the radial direction of the partial metal base 27 having the semi-cylindrical shape.

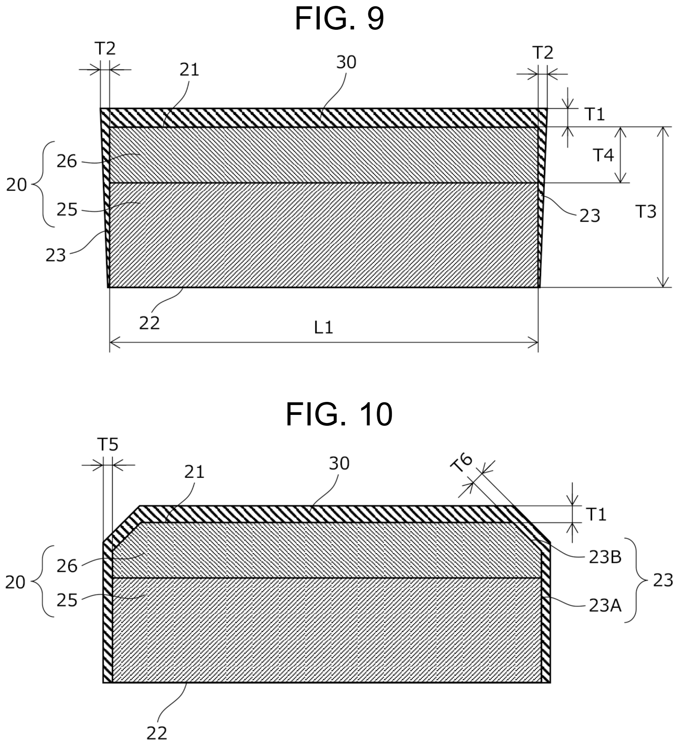

In the slide bearing 10 in the above-described embodiment, the thickness T2 of the insulating layer 30 covering the axial-directional end surface 23 of the metal base 20 is constant over the whole in the radial direction. As shown in a modification in Fig. 9, the thickness T2 of the insulating layer 30 covering the axial-directional end surface 23 of the metal base 20 does not need to be constant in the radial direction. More specifically, the thickness T2 of the insulating layer 30 covering the axial-directional end surface 23 of the metal base 20 may be decreased from the inner circumferential surface 21 of the metal base 20 toward the outer circumferential surface 22 on a radial-directional cross section. Also in this modification, the maximal thickness of the insulating layer 30 covering the axial-directional end surface 23 of the metal base 20 is more than 0% of the minimal thickness of the insulating layer 30 covering the inner circumferential surface 21, and is less than or equal to 50% of the minimal thickness, preferably less than or equal to 30% of the minimal thickness, more preferably less than or equal to 5% of the minimal thickness.

In the slide bearing 10 in this modification, the breakdown voltage of the insulating layer 30 covering the axial-directional end surface 23 of the metal base 20 is maximized at a position close to the inner circumferential surface 21, and is decreased at a position closer to the outer circumferential surface 22. The discharge from the rotating shaft 6 to the axial-directional end surface 23 of the metal base 20 easily occurs at a position on the axial-directional end surface 23 that is closer to the outer circumferential surface 22 than to the inner circumferential surface 21. Even when the discharge causes the temperature to become high at a position close to the outer circumferential surface 22 of the metal base 20, the temperature of the inner circumferential surface 21 of the metal base 20 is unlikely to become high. It is unlikely to cause damage such as the heat fusion of the insulating layer 30 that covers the inner circumferential surface 21 of the metal base 20 and that serves as the sliding surface. The insulating layer 30 that covers the inner circumferential surface 21 and that serves as the sliding surface is further unlikely to be damaged by the discharge.

In the slide bearing 10 in the above-described embodiment, the axial-directional end surface 23 spreads in the direction orthogonal to the axial-directional direction X. As shown in a modification in Fig. 10, the axial-directional end surface 23 may include an inclined surface 23B that is inclined with respect to the axial direction X of the cylindrical shape. In the example shown in Fig. 10, the axial-directional end surface 23 includes an orthogonal surface 23A that spreads in the direction orthogonal to the axial direction X and the inclined surface 23B that is inclined with respect to the axial direction X. The surface that is inclined with respect to the axial direction X means that the angle between a direction in which the surface spreads and the axial direction X is more than 0° and less than 90°. The angle between the direction in which the inclined surface 23B spreads and the axial direction X may be 10° or more, and may be 50° or less.

The inclined surface 23B is connected to the orthogonal surface 23A. The inclined surface 23B is at a position closer to the inner circumferential surface 21 than the orthogonal surface 23A is. The inclined surface 23B is connected to the inner circumferential surface 21. The orthogonal surface 23A is connected to the outer circumferential surface 22. The inclined surface 23B is a chamfered surface of the axial-directional end surface 23 with respect to the inner circumferential surface 21.

The thickness T2 of the insulating layer 30 covering the axial-directional end surface 23 includes a thickness T5 of the insulating layer 30 covering the orthogonal surface 23A and a thickness T6 of the insulating layer 30 covering the inclined surface 23B. In this modification, the thickness T5 of the insulating layer 30 covering the orthogonal surface 23A is the length of the insulating layer 30 covering the axial-directional end surface 23 along the axial direction X, and the thickness T6 of the insulating layer 30 covering the inclined surface 23B is the length along the normal direction of the inclined surface 23B. A maximal thickness of the insulating layer 30 covering the orthogonal surface 23A and a maximal thickness of the insulating layer 30 covering the inclined surface 23B are more than 0% of the minimal thickness of the insulating layer 30 covering the inner circumferential surface 21, and is less than or equal to 50% of the minimal thickness, preferably less than or equal to 30% of the minimal thickness, more preferably less than or equal to 5% of the minimal thickness.

In the slide bearing 10 in this modification, as shown in Fig. 10, the surface of the insulating layer 30 covering the inclined surface 23B is also a surface that is inclined with respect to the axial direction X. By the inclined surface 23B, it is possible to easily insert the rotating shaft 6 into the inner side of the cylindrical shape of the slide bearing 10, when the rotating shaft 6 is caused to pass through the inner side of the cylindrical shape of the slide bearing 10.

Without being limited to the example shown in Fig. 10, another inclined surface may be connected to the outer circumferential surface 22, on the axial-directional end surface 23. The inclined surface may be a chamfered surface of the axial-directional end surface 23 with respect to the outer circumferential surface 22. The axial-directional end surface 23 may include both of the inclined surface 23B connected to the inner circumferential surface 21 and the inclined surface connected to the outer circumferential surface 22.

Aspects in the present disclosure are not limited to the above-described embodiment and modifications, and include various modifications that can be conceived by a person skilled in the art. In addition, effects of the present disclosure are not limited to the above-described contents and the contents about the modifications. Various additions, alterations and partial removals can be performed without departing from conceptual ideas and spirits of the present disclosure that are derived from the contents specified in the claims and equivalents thereto. For example, a plurality of modifications can be combined in a range in which conceptual ideas and spirits do not interfere with each other.

## Claims

1. A slide bearing (10) that bears a rotating shaft (6) of a vehicle driving motor (1), the slide bearing (10) comprising:
a metal base (20) that includes an inner circumferential surface (21), an outer circumferential surface (22), and two axial-directional end surfaces (23), and that has a cylindrical shape; and
an insulating layer (30) that covers at least the inner circumferential surface (21) of the metal base (20) and the two axial-directional end surfaces (23) of the metal base (20), wherein
a maximal thickness of the insulating layer (30) covering the axial-directional end surface (23) of the metal base (20) is more than 0% of a minimal thickness of the insulating layer (30) covering the inner circumferential surface (21) of the metal base (20), and is less than or equal to 50% of the minimal thickness of the insulating layer (30) covering the inner circumferential surface (21) of the metal base (20).

2. The slide bearing (10) according to claim 1, wherein the metal base (20) includes two partial metal bases (27) each of which has a semi-cylindrical shape.

3. The slide bearing (10) according to claim 1 or 2, wherein a thickness of the insulating layer (30) covering the axial-directional end surface (23) of the metal base (20) is decreased from the inner circumferential surface (21) of the metal base (20) toward the outer circumferential surface (22) of the metal base (20).

4. The slide bearing (10) according to any one of claims 1 to 3, wherein
each of the axial-directional end surfaces (23) includes an inclined surface (23B) that is inclined with respect to an axial direction of the cylindrical shape, and
the inclined surface (23B) of each of the axial-directional end surfaces (23) is connected to the inner circumferential surface (21).
